# EUROPEAN PATENT APPLICATION

(11) **EP 1 465 281 A2**
(43) Date of publication of application: **06.10.2004**
(21) Application number: 03021822.6
(22) Date of filing: 26.09.2003
(51) Int. Cl.: H01M 10/50, H01M 8/04

(54) **Fuel cell system with liquid cooling device**

(30) Priority: 31.03.2003 CN 03121300
(71) Applicant: Asia Pacific Fuel Cell Technologies, Ltd., Chunan, Miaoli 350 (TW)
(72) Inventor: Yang, Jefferson YS, 4F 22, Ke-Dung 3 Road Chunan Miaoli 350 (TW); Cheng- Yaw-Chung, 4F 22, Ke-Dung 3 Road Chunan Miaoli 350 (TW)
(74) Representative: Goddar, Heinz J., Dr.

(57) **Abstract**

A fuel cell system includes a fuel cell stack, an air supply system including a blower for driving the air to the fuel cell stack and an air humidifier for humidifying the air supplied to the fuel cell stack, a hydrogen supply system including a hydrogen storage and a pressure regulating device, and a hydrogen recirculator for receiving excessive hydrogen from the fuel cell stack and forcing the hydrogen back into the fuel cell stack in order to induce a hydrogen flow inside the fuel cell stack, a coolant circulation system supplying low temperature coolant to the fuel cell stack for absorbing heat from the fuel cell stack and including a coolant reservoir in which the coolant is stored, a pump driving the circulation of the coolant, a radiator for removing heat from the high temperature coolant and converting the high temperature coolant into the low temperature coolant. The coolant reservoir includes a ventilation device for removing air bubbles from the coolant. The coolant circulation system includes a heat exchanger for transferring heat from the high temperature coolant to the hydrogen storage. A control circuit electrically controls the flow and pressure regulating device, the blower, the pump and the fan.

## Description

### BACKGROUND OF THE INVENTION

### 1. Field of the Invention

The present invention relates generally to a fuel cell system, and in particularly to a fuel cell system comprising a liquid cooling device for improving performance thereof.

### 2. Description of the Prior Art

Fuel cell power system is capable of generating electrical power energy by means of electro-chemical reaction between a fuel, such as hydrogen and methanol, and an oxidizer, such as oxygen. The fuel cell is classified, based on the electrolyte thereof, as proton exchange membrane fuel cell or polymer electrolyte membrane fuel cell, abbreviated as PEMFC or PEM, alkaline fuel cell (AFC), phosphoric acid fuel cell (PAFC), molten carbonate fuel cell (MCFC) and solid oxide fuel cell (SOFC).

Among these known fuel cells, the PEMFC is the best-developed technique, having the advantages of low operation temperature, fast start-up and high power density. Thus, the PEMFC is very suitable for transportation vehicles and power generation systems, such as home power systems and other portable and stationary power generation systems.

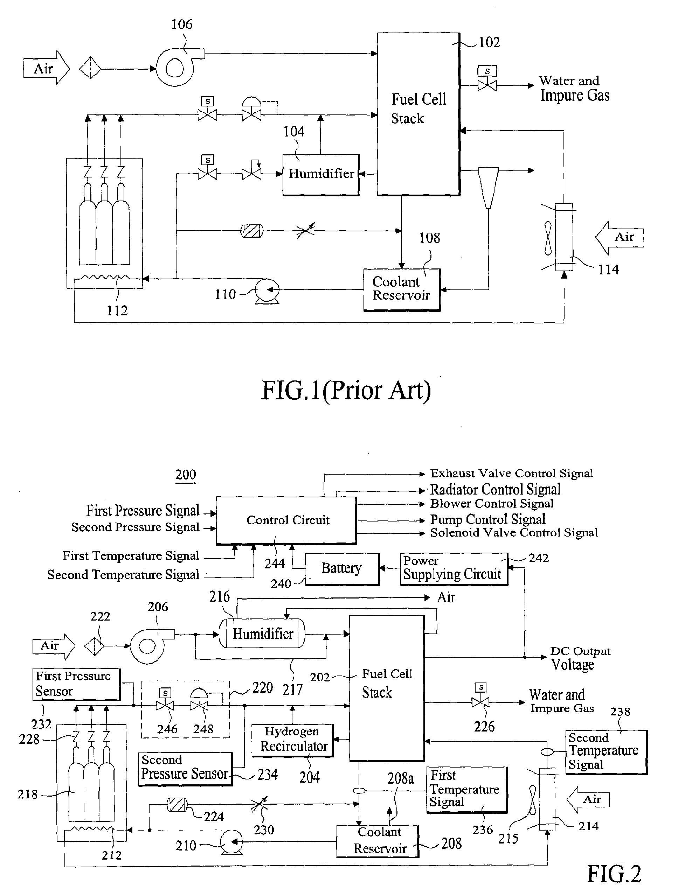

Fuel cells operating in the high power output condition generally generate large amount of heats. Thus, water cooling technique is commonly employed in the fuel cell system for removal of heat therefrom. **Figure 1** of the attached drawings shows an example of conventional fuel cell systems. The conventional fuel cell system comprises a fuel cell stack **102** to which oxygen and hydrogen are supplied for the electro-chemical reaction.

In suitable moisturized condition, the electro-chemical reaction between oxygen and hydrogen is highly improved. Therefore, to enhance performance, a humidifier **104** is arranged in a passage through which hydrogen is conveyed to the fuel cell stack **102** for humidifying the hydrogen. In a heavy load condition, the operation temperature of the fuel cell stack **102** rises to approximately 60°C-80°C. At this time, a large quantity of dry air that contains oxygen is drawn in by a blower **106** and driven to the fuel cell stack **102** for reacting with hydrogen. However, this speeds up the loss of water from the electrolyte membrane and low humidity of the fuel cell stack **102** results to poor performance.

Further, the fuel cell stack **102** is cooled by water in reservoir **108**. The water may get frozen and becomes solid ice in a cold environment, and is inefficient or even unable to cool the fuel cell stack **102.** A coolant circulation is formed between the water reservoir **108** and the fuel cell stack **102** which comprises a water reservoir **108** for supplying cooling water, a pump **110** for driving the water from the water reservoir **108,** a heat exchanger **112** for exchanging heat between the cooling water and a hydrogen storage for heating the hydrogen storage and a radiator **114** for removing heat from the cooling water. As the water reservoir **108** is not provided with ventilation means for expelling air, the bubbles trapped may induce blockage of the coolant circulation passage. Consequently, the cooling water cannot be properly conveyed to the fuel cell stack **102**.

It is thus desired to provide a fuel cell system that overcomes the above-discussed disadvantages of the prior art.

### SUMMARY OF THE INVENTION

Thus, an object of the present invention is to provide a liquid-cooling fuel cell system that comprises a device for humidifying air and supplying the air to a fuel cell stack to ensure the high performance of fuel cell stack.

Another object of the present invention is to provide a liquid-cooling fuel cell system comprising a coolant reservoir storing coolant therein for cooling the fuel cell stack, wherein the reservoir is provided with a ventilation device for removing air bubbles generated inside and entraining the coolant flow, and thus preventing the coolant circulation from being blocked by the air bubbles.

To achieve the above objects, in accordance with the present invention, there is provided a fuel cell system comprising a fuel cell stack, an air supply system including a blower for driving the air to the fuel cell stack and an air humidifier for humidifying the air supplied to the fuel cell stack, a hydrogen supply system comprising a hydrogen storage in which hydrogen is stored and from which a hydrogen flow is supplied to the fuel cell stack and a pressure regulating device for regulating the hydrogen flow, and a hydrogen recirculator for receiving excessive hydrogen from the fuel cell stack and forcing the hydrogen back into the fuel cell stack in order to induce a hydrogen flow inside the fuel cell stack, a coolant circulation system supplying low temperature coolant to the fuel cell stack for absorbing heat from the fuel cell stack and including a coolant reservoir in which the coolant is stored, a pump driving the circulation of the coolant, a radiator for removing heat from the high temperature coolant and converting the high temperature coolant into the low temperature coolant. The coolant reservoir comprises a ventilation device for removing air bubbles from the coolant. The coolant circulation system comprises a heat exchanger for transferring heat from the high temperature coolant to the hydrogen storage. A control circuit electrically controls the flow and pressure regulating device, the blower, the pump and the fan.

The fuel cell system provides humidified air that has sufficient moisture content for performing chemical reaction at high rate even at heavy load condition, thereby enables the fuel cell stack to provide large working current. Unreacted and excessive hydrogen is recovered and circulated back to the fuel cell stack, and recycle of hydrogen efficiently enhances the chemical reaction inside the fuel cell stack. Further, the ventilation device effectively expels air bubbles entraining the coolant flow thereby eliminating blockage of the coolant flow. In addition, an anti-freeze agent may be added in the coolant, which renders resistance to low temperature when the fuel cell system is used in cold areas.

### BRIEF DESCRIPTION OF THE DRAWINGS

The present invention will be apparent to those skilled in the art by reading the following description of a preferred embodiment thereof, with reference to the attached drawings, in which:

Figure 1 is a system block diagram of a conventional fuel cell system;

Figure 2 is system block diagram of a fuel cell system constructed in accordance with the present invention;

Figure 3 is a block diagram of an application of the fuel cell system of the present invention in an electrical vehicle;

Figure 4 is a block diagram of another application of the fuel cell system of the present invention in an alternating current power generation system; and

Figure 5 is a block diagram of a further application of the fuel cell system of the present invention in a direct current power generation system.

### DETAILED DESCRIPTION OF THE PREFERRED EMBODIMENTS

With reference to the drawings and in particular to **Figure 2**, a fuel cell system in accordance with the present invention, generally designated with reference numeral **200**, comprises a fuel cell stack **202**, which receives hydrogen from a hydrogen storage **218** that may comprise a number of alloy based hydrogen canisters or pressurized hydrogen canisters, each connected to the fuel cell stack **202** by a valve **228**. The supply of the hydrogen from the hydrogen storage **218** to the fuel cell stack **202** is regulated by a flow and pressure regulating device **220**. Also a hydrogen recirculator **204** is connected to the fuel cell stack **202** for recirculation of hydrogen back into the fuel cell stack **202.**

Air is drawn through an air filter **222** into the fuel cell system **200** by a blower **206.** Impurities contained in the air are removed by the filter **222.** The air is then conveyed through an air humidifier **216** to increase the humidity thereof. The air is then supplied to the fuel cell stack **202** for reaction with the hydrogen in order to generate electricity with water and heat as byproducts of the reaction. A bypass connection **217** is connected between the air blower **206** and the fuel cell stack **202** in parallel to the air humidifier **216** for directly supplying air containing oxygen to the fuel cell stack **202**, and thus enables the air to maintain a desired humidity to the fuel cell stack **202**. Undesired water and impurity gas may be expelled from the fuel cell stack **200** through an exhaust valve **226** to the surroundings.

The air humidifier **216** also receives humid air from the fuel cell stack **202,** which carries a great amount of moisture since water is continuously and rapidly generated by reaction in the fuel cell stack **202.** The fresh air drawn by the air blower **206** can absorb water from the humid air in the humidifier **216** to obtain the desired humidity. The air is then fed to the fuel cell stack **202.** The moisture contained in the outlet air efficiently promotes the reaction in the fuel cell stack **202.**

In addition, when the temperature of the fuel cell stack **202** reaches 40-60°C or when the fuel cell stack **202** is in a heavy load, a large amount of fresh air is drawn in by the air blower **206** through the filter **222**. After passing through the air humidifier **216**, the bulk air is properly humidified by the humid air from the fuel cell stack **202**. In other words, the more air is drawn into the fuel cell system **200**, the more water is generated in the fuel cell stack **202** and circulated to the humidifier **216** to humidify the fresh air. Thus, the fuel cell stack **202** does not run short of water and the performance thereof can be maintained.

The supply of hydrogen that is stored in the canisters of the hydrogen storage **218** is controlled by the valves **228,** which selectively stop the hydrogen flow from each canister. The hydrogen flow is controlled and regulated by the flow and pressure regulating device **220** which comprises a solenoid valve **246** and a pressure regulating valve **248**. The solenoid valve **246** is controlled by a control circuit **244** such that it is selectively turned on or off for the flowing of the hydrogen from the hydrogen storage **218**, while the pressure regulating valve **248** regulates the pressure of the hydrogen flowing through the solenoid valve **246** to the fuel cell stack **202.**

A first pressure sensor **232** is mounted between the hydrogen storage **218** and the flow and pressure regulating device **220,** at a high pressure side (upstream side) of the flow and pressure regulating device **220.** The first pressure sensor **232** detects the hydrogen pressure of the high pressure side of the flow and pressure regulating device **220** and generates, in response to the detection, a first pressure signal indicating the hydrogen pressure of the high pressure side of the hydrogen supplying pipeline to the control circuit **244**, whereby the control circuit **244** controls the solenoid valve **246** based on the electrical signal. A second pressure sensor **234** is mounted between the flow and pressure regulating device **220** and the fuel cell stack **202**, at a low pressure side (downstream side) of the flow and pressure regulating device **220**. The second pressure sensor **234** detects the hydrogen pressure of the low pressure side of the flow and pressure regulating device **220** and generates a second pressure signal indicating the hydrogen pressure of the low pressure side of the hydrogen supplying pipeline to the control circuit **244**. Accordingly, the control circuit **244** controls the turn on/off of the solenoid valve **246**, and thereby the passage for the hydrogen flow is opened or closed. Excessive pressure of the hydrogen is avoided in order to secure the fuel cell system from the damage caused by the excessive hydrogen pressure.

The hydrogen recirculator **204** draws unreacted and excessive hydrogen from the fuel cell stack **202** and forces the hydrogen back into the fuel cell stack **202**. This induces a forced flowing of hydrogen through the fuel cell stack **202**, and subsequently hydrogen is uniformly distributed. Thereby, the reaction between the hydrogen and the oxygen is promoted and the performance of the fuel cell is improved.

The exhaust valve **226**, which may be a solenoid valve, is controlled by the control circuit **244** to remove undesired water and impurities from the fuel cell stack **202** at a regular interval. This maintains the purity of the hydrogen inside the fuel cell stack **202**. Also, accumulation of water inside hydrogen passages can be eliminated in order to maintain the performance of the fuel cell stack **202**.

A coolant circulation system comprising a coolant reservoir **208**, a pump **210**, a heat exchanger **212** and a radiator **214** circulates a coolant through the fuel cell stack **202**. Low temperature coolant flows into the fuel cell stack **202** and absorbs heat from the fuel cell stack **202**, and high temperature coolant flows out of the fuel cell stack **202** and is guided to the coolant reservoir **208**. Air bubbles entraining the coolant may be expelled out of the fuel cell system **200** via a ventilation hole **208a** or ventilation device formed in the reservoir **208.** The air bubbles, if not properly removed from the coolant, may impede the coolant passage and may cause no load running of the pump **210**. The coolant may comprise water containing an anti-freeze agent, such as ethylene glycol. Such a coolant is capable to tolerate low temperature without freezing, and therefore, enables the use of the fuel cell system **200** in a low temperature environment and cold area.

The high temperature coolant received in the coolant reservoir **208** is driven by the pump **210** to circulate. A filter **224** is connected to the circulation path of the coolant for removing impurity from the coolant. A valve **230** is connected between the filter **224** and the coolant reservoir **208** for controlling the flow rate of the filtered coolant.

The heat exchanger **212** is arranged inside the hydrogen storage **218** for absorbing heat from the high temperature coolant for heating of the hydrogen storage canisters. The alloy based hydrogen canister lowers its temperature when releasing hydrogen from the alloy. The high temperature coolant supplements heat to the hydrogen storage canister and maintains it at a proper temperature for normal supply of hydrogen to the fuel cell stack **202**. The coolant is then conveyed to the radiator **214** for further removing heat therefrom. A fan **215** is arranged to cause an air flow through the radiator **214** for efficiently removing heat from the high temperature coolant and converting the high temperature coolant into the low temperature coolant for directly supplying to the fuel cell stack **202** and effectively lowering down the temperature of the fuel cell stack **202.**

A first thermocouple **236** or other temperature sensor is mounted between the fuel cell stack **202** and the coolant reservoir **208,** at the high temperature side (downstream side) of the fuel cell stack **202**, to detect the temperature of the coolant and provides a first temperature signal indicating the temperature of the coolant at the high temperature side of the fuel cell stack **202** to the control circuit **244**. A second thermocouple **238** is mounted between the fuel cell stack **202** and the radiator **214** at the low temperature side (upstream side) of the fuel cell stack **202**, to detect the temperature of the coolant and provides a second temperature signal indicating the temperature of the coolant at the upstream side of the fuel cell stack **202** to the control circuit **244.** The control circuit **244** controls the operation of the fan **215** in accordance with the first temperature signal and the second temperature signal in order to maintain the operation temperature of the fuel cell stack **202.**

The control circuit **244** electrically controls the operation of the flow and pressure regulating device **220** to regulate the hydrogen flowing into the fuel cells stack **202**. The control circuit **244** also electrically controls the blower **206** to control the air flowing through the air humidifier **216** and into the fuel cell stack **202**. The control circuit **244** electrically controls the exhaust valve **226** for expelling impurities and water from the fuel cell stack **202**. The control circuit **244** electrically controls the pump **210** that circulates the coolant through the fuel cell stack **202** and the fan **215** of the radiator **214** that removes heat from the coolant in order to maintain the temperature of the fuel cell stack **202**. In addition, the control circuit **244** may conduct a self-diagnosis, such as detection of the hydrogen pressure of the hydrogen storage **218**, and examination of the operation conditions of the blower **206**, the pump **210**, the fan **215**, the solenoid valve **246**, the exhaust valve **226**, the fuel cell stack **202** and, if desired, the control circuit **244** itself.

A backup battery set **240** may be incorporated in the fuel cell system **200** for powering the control circuit **244** in starting up the fuel cell system **200.** The backup battery set **240** may comprise a lead-acid battery or the like, which supplies electricity to the control circuit **244** when the fuel cell system **200** is just started. The power of the backup battery **240** is also supplied to other devices, such as the blower **304,** the pump **210,** the cooling fan **215,** the solenoid valve **246** and the exhaust valve **226** for the startup operation. Once the fuel cell system **200** is properly started, electricity supplied from the fuel cell stack **202** recharges the backup battery set **240** via a power supplying circuit **242**. The power supplying circuit **242** converts the DC output voltage generated from the fuel cell stack **202** into a working voltage for the control circuit **244** and the backup battery set **240.**

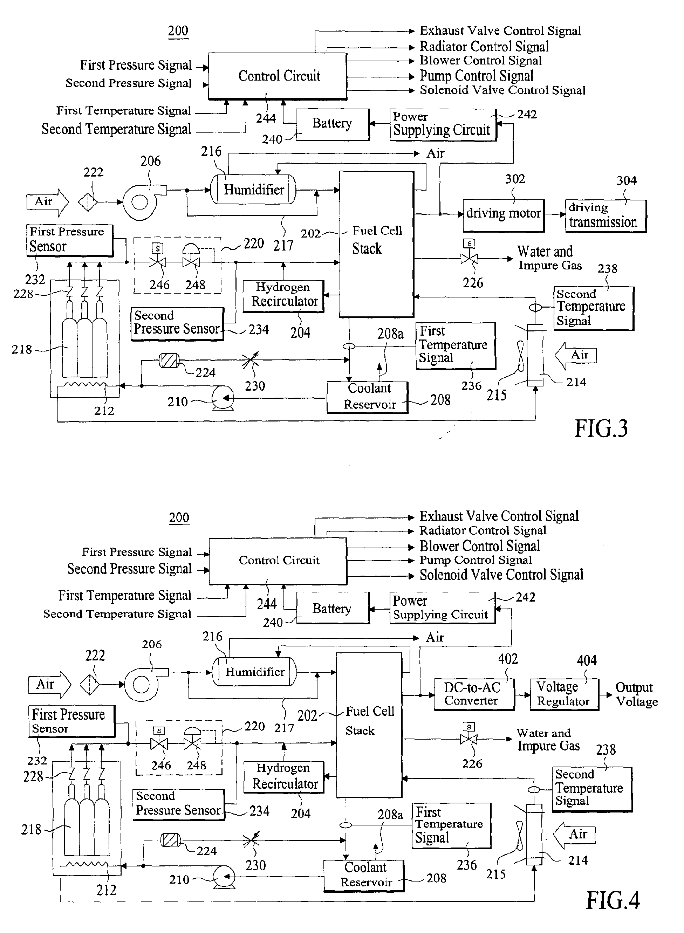

The fuel cell system **200** comprising a liquid cooling device is commonly employed in applications requiring large power, such as electrical vehicles and small-sized electrical generators. **Figure 3** shows an application of the fuel cell system **200** of the present invention in an electrical vehicle wherein the fuel cell stack **202** of the fuel cell system **200** generates a DC output voltage, which is applied to a driving motor **302** for driving a transmission **304** of the electrical vehicle. It is noted that the components and parts of the fuel cell system **200** of the present invention illustrated in **Figure 2** are completely incorporated in **Figure 3** for clarity.

**Figure 4** shows another application of the fuel cell system **200** of the present invention in an alternating current generator, which may be portable or stationary. The fuel cell stack **202** of the fuel cell system **200** generates a DC output voltage, which is applied to a DC-to-AC converter **402** for converting the direct current generated by the fuel cell stack **202** into an AC output voltage. The AC output voltage may be further regulated by a voltage regulator **404**. Voltage of the alternating current so generated may be changed as desired. The components and parts of the fuel cell system **200** of the present invention illustrated in **Figure 2** are completely incorporated in **Figure 4** for clarity.

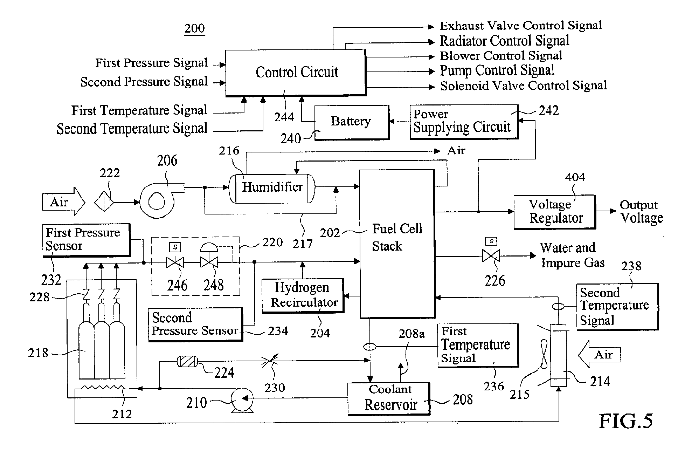

**Figure 5** shows a further application of the fuel cell system **200** of the present invention in a direct current generator, which may be portable or stationary. The fuel cell stack **202** of the fuel cell system **200** generates a DC output voltage, which is directly applied to a voltage regulator **404** for voltage regulation. It is noted that the components and parts of the fuel cell system **200** of the present invention illustrated in **Figure 2** are completely incorporated in **Figure 5** for clarity.

To this point, it can be noted that the fuel cell system of the present invention provides humidified air containing oxygen to the fuel cell stack for enhancing the reaction and to avoid insufficiency of water in case of heavy loads. It is also noted that the recirculation of the hydrogen back to the fuel cell stack helps promoting elctro-chemical reaction inside the fuel cell stack. In addition, the ventilation hole or ventilation device formed in the coolant reservoir removes air bubbles entraining the coolant flow and effectively prevents the coolant flow from being blocked by the air bubbles. The anti-freeze agent in the coolant allows for use of the fuel cell system in extreme low temperature condition and cold areas without any solidification of the coolant and thus maintaining the operability of the system in the cold area.

Although the present invention has been described with reference to the preferred embodiments thereof, it is apparent to those skilled in the art that a variety of modifications and changes may be made without departing from the scope of the present invention which is intended to be defined by the appended claims.

The features disclosed in the foregoing description, in the claims and/or in the accompanying drawings may, both separately and in any combination thereof, be material for realising the invention in diverse forms thereof.

## Claims

1. A fuel cell system comprising:
a fuel cell stack;
an air supply system supplying an air flow to the fuel cell stack, comprising a blower for driving the air to the fuel cell stack and an air humidifier for humidifying the air supplied to the fuel cell stack;
a hydrogen supply system supplying hydrogen to the fuel cell stack, comprising a hydrogen storage in which hydrogen is stored and from which a hydrogen flow is supplied to the fuel cell stack, and a pressure regulating device for regulating the hydrogen flow, a hydrogen recirculator for receiving excessive hydrogen from the fuel cell stack and forcing the hydrogen back into the fuel cell stack in order to induce a hydrogen flow inside the fuel cell stack; and
a coolant circulation system supplying a low temperature coolant to the fuel cell stack for absorbing heat from the fuel cell stack and becoming high temperature coolant, comprising a coolant reservoir in which the coolant is stored, a pump driving the circulation of the coolant, a radiator for removing heat from the high temperature coolant and converting the high temperature coolant into the low temperature coolant, the coolant reservoir comprising a ventilation device for removing air bubbles from the coolant, the coolant circulation system further comprising a heat exchanger for transferring heat from the high temperature coolant to the hydrogen storage, the radiator comprising a fan for generating an air flow therethrough to removing heat from the coolant; and
a control circuit electrically controlling the flow and pressure regulating device, the blower, the pump and the fan.

2. The fuel cell system as claimed in Claim 1, further comprising:
a battery set powering the control circuit;
a power supplying circuit for receiving and converting a direct current from the fuel cell stack into a working voltage;
an exhaust valve controlled by the control circuit to expel impurities and water from the fuel cell stack;
a first filter for removing an impurity from the air drawn by the blower;
a valve mounted to the hydrogen storage for selectively shutting down the hydrogen storage;
a first pressure sensor mounted between the hydrogen storage and the flow and pressure regulating device for detecting hydrogen pressure in a high pressure side of the flow and pressure regulating device and generating a first pressure signal corresponding to the hydrogen pressure to the control circuit;
a second pressure sensor mounted between the flow and pressure regulating device and the fuel cell stack for detecting hydrogen pressure in a low pressure side of the flow and pressure regulating device and generating a second pressure signal corresponding to the hydrogen pressure to the control circuit;
a first temperature sensor mounted between the fuel cell stack and the coolant reservoir to detect a temperature of the high temperature coolant and generating a first temperature signal to the control circuit;
a second temperature sensor mounted between the fuel cell stack and the radiator to detect a temperature of the low temperature coolant and generating a second temperature signal to the control circuit;
a second filter for removing an impurity from the high temperature coolant; and
a valve for controlling a flow rate of the coolant.

3. The fuel cell system as claimed in Claim 2, wherein the exhaust valve comprises a solenoid valve.

4. The fuel cell system as claimed in Claim 1, wherein the air humidifier receives a humidity from the fuel cell stack and transfer the water to the air drawn by the air blower.

5. The fuel cell system as claimed in Claim 1, wherein the hydrogen storage comprises an alloy based hydrogen storage canisters.

6. The fuel cell system as claimed in Claim 1, wherein the flow and pressure regulating device comprises:
a solenoid valve controlled by the control circuit for selectively shutting down the hydrogen flow; and
a pressure regulating valve for regulating pressure of the hydrogen flow.

7. The fuel cell system as claimed in Claim 1, wherein the control circuit electrically controls the flow and pressure regulating device for regulating the hydrogen flow toward the fuel cell stack, the control circuit controls the blower to control the air flowing through the air humidifier, the control circuit electrically controls the pump that circulates the coolant, the control circuit electrically controls the fan for generating the air flow, the control circuit electrically receives the high pressure signal, the low pressure signal, the high temperature signal and the low temperature signal and the control circuit performs a self-diagnosis procedure.

8. The fuel cell system as claimed in Claim 7, wherein the self-diagnosis procedure comprises detection of the hydrogen pressure of the hydrogen storage, and examination of the operation conditions of the blower, the pump, the fan, the fuel cell stack and the control circuit.

9. The fuel cell system as claimed in Claim 1, wherein a bypass is formed between the air blower and the fuel cell stack to directly supply air containing oxygen to the fuel cell stack.

10. The fuel cell system as claimed in Claim 1, wherein the coolant comprises a water containing anti-freeze agent.

11. The fuel cell system as claimed in Claim 10, wherein the anti-freeze agent is ethylene glycol.

12. The fuel cell system as claimed in Claim 1, wherein the fuel cell stack generates a DC output voltage that is adapted to be applied to a driving motor of an electrical vehicle.

13. The fuel cell system as claimed in Claim 1, wherein the fuel cell stack generates a DC output voltage that is adapted to be applied to an alternating current power generation system comprising a direct current to alternating current converter and a voltage regulator.

14. The fuel cell system as claimed in Claim 1, wherein the fuel cell stack generates a DC output voltage that is adapted to be applied to a direct current power generation system comprising a voltage regulator.
